# EUROPÄISCHE PATENTSCHRIFT

(11) **EP 2 835 650 B1**
(45) Veröffentlichungstag und Bekanntmachung des Hinweises auf die Patenterteilung: **02.11.2016**
(21) Anmeldenummer: 14177393.7
(22) Anmeldetag: 17.07.2014
(51) Int. Cl.: G01P 5/07, G01P 13/02, G01P 13/00, G01K 7/16

(54) **Windsensor**
Wind sensor
Capteur anémométrique

(30) Priorität: 09.08.2013 DE 102013108626
(43) Veröffentlichungstag der Anmeldung: 11.02.2015
(73) Patentinhaber: KRIWAN INDUSTRIE-ELEKTRONIK GMBH, 74670 Forchtenberg (DE)
(72) Erfinder: Kriwan, Friedrich, 74670 Forchtenberg (DE); Elfenbein, Eduard, 74670 Forchtenberg (DE)
(74) Vertreter: Tetzner, Michael

(56) Entgegenhaltungen:
- EP-A1- 0 100 715
- DE-A1- 3 736 170
- DE-B- 1 101 233
- DE-U1-202006 000 816
- US-A- 2 985 014
- US-A1- 2011 036 160
- US-B1- 6 918 294
- Ammonit Measurement GmbH: "Anemometer Vaisala WAA252", , 23. Dezember 2011 (2011-12-23), Seiten 1-2, XP055157182, Gefunden im Internet: URL:http://www.wind-pgc.com/files/en_ds_an emometer_vaisalawa.pdf [gefunden am 2014-12-08]

## Beschreibung

Die Erfindung betrifft einen Windsensor mit einem Gehäuse und einem drehbar am Gehäuse gelagerten Windrad.

Windsensoren werden auch im Winter bzw. an sehr kalten Standorten eingesetzt. Damit das Messsignal nicht durch Schnee- und Eisanhaftungen verfälscht wird, sind für einen derartigen Einsatz beheizte Windsensoren vorgesehen. In der DE 710 457 wird zur Verhinderung der Vereisung von Windradmessgeräten der Windradflügel als Hohlkörper ausgebildet, wobei eine elektrische Heizwicklung ruhend derart angeordnet wird, dass sie bis in den Hohlkörpern hineinragt. Bei extremen Temperaturen lässt sich mit einer solchen Lösung jedoch eine Vereisung nicht zuverlässig vermeiden.

Aus der DE 29 16 504 B1 ist ein Anemometer mit einem Schalenstern bekannt, bei dem ein ohmsches Heizelement bis in die Schalen verlegt ist. Die Energieübertragung vom feststehenden Gehäuse zum rotierenden Schalenstern erfolgt dabei über Schleifkontakte. Die CN 101900742 A schlägt ein Anemometer mit einer Induktionsheizung vor, bei der die Wärme durch Wirbelströme im Bereich um die Rotationsachse erzeugt wird. Auch durch diese Lösung können bei extremen Temperaturen eine Vereisung der weiter außen liegenden Schalen nicht ausgeschlossen werden.

Weiterhin ist aus der DE 37 36 170 A1 eine induktive Energieübertragung zur Beheizung eines Windrades bekannt. Die Anordnung von Heizelementen im Inneren eines Winderfassungselements ist beispielsweise aus der DE 20 2006 000 816 U1, der US 2,985,014 A, der US 6,918,294 B1, der EP 0 100 715 A1 und der US 2011/0036160 A1 bekannt.

Der Erfindung liegt daher die Aufgabe zugrunde, einen Windsensor anzugeben, der eine Verfälschung der Messergebnisse durch Schnee und Eis zuverlässig verhindert.

Erfindungsgemäß wird diese Aufgabe durch die Merkmale des Anspruchs 1 gelöst.

Der erfindungsgemäße Windsensor weist ein Gehäuse und ein drehbar am Gehäuse gelagertes Winderfassungselement auf, wobei im Winderfassungselement wenigstens ein ohmsches Heizelement eingebaut ist und Mittel zur Energieübertragung zwischen dem Gehäuse und dem mit dem Winderfassungselement rotierenden ohmschen Heizelement vorgesehen sind, die eine im Gehäuse angeordnete Primärspule und eine im Winderfassungselement angeordnete Sekundärspule umfassen, wobei die Sekundärspule mit dem ohmschen Heizelement in Verbindung steht. Der erfindungsgemäße Windsensor weist ein Gehäuse und ein drehbar am Gehäuse gelagertes, als Windrad ausgebildetes Winderfassungselement auf. Das Windrad sieht einen Schalenstern mit mehreren Schalen vor, wobei im Windrad wenigstens ein ohmsches Heizelement eingebaut ist und Mittel zur Energieübertragung zwischen dem Gehäuse und dem mit dem Windrad rotierenden ohmschen Heizelement vorhanden sind, die eine im Gehäuse angeordnete Primärspule und eine im Windrad angeordnete Sekundärspule umfassen, wobei die Sekundärspule mit dem ohmschen Heizelement in Verbindung steht. Das Winderfassungselement besteht aus zwei miteinander verbundenen Hälften, wobei das wenigstens eine ohmsche Heizelement zwischen den beiden Hälften eingebettet ist. Die mehreren Schalen des Windrads werden jeweils über flach ausgebildete Stege gehaltert, wobei sich die Stege bis in die Schalen erstrecken und die Schalen in zwei Bereiche unterteilen, und das wenigstens eine Heizelement in den Stegen eingebettet ist und sich bis in den Bereich der Schalen erstreckt.

Das ohmsche Heizelement hat gegenüber einer zentralen Heizquelle den Vorteil, dass es bis in die äußere Peripherie, d. h. bis in die Schalen verlegt werden kann und dort eine Beeinträchtigung durch Schnee und Eis verhindert. Die induktive Übertragung der für das Heizelement erforderlichen Energie kann im Wesentlichen ohne Verschleiß erfolgen. Das Einbetten des Heizelements zwischen zwei Hälften des Winderfassungselements ermöglicht zudem eine optimale Verteilung der Wärme.

Weitere Ausgestaltungen der Erfindung sind Gegenstand der Unteransprüche.

Gemäß einer weiteren Ausgestaltung der Erfindung sind im Winderfassungselement wenigstens ein Heizungs-Temperatursensor zur Erfassung der Temperatur des Winderfassungselements und eine Sekundär-Steuerelektronik vorgesehen, wobei der Heizungs-Temperatursensor mit der Sekundär-Steuerelektronik zur Ansteuerung des ohmschen Heizelementes in Abhängigkeit der Temperatur des Winderfassungselements in Verbindung steht. Diese Maßnahme dient vor allem als Schutz des Winderfassungselementes vor Überhitzung. Darüber hinaus kann der Energieverbrauch genau auf den tatsächlichen Bedarf abgestimmt werden.

Weiterhin kann im Gehäuse eine Primär-Steuerelektronik zur Ansteuerung der Primärspule vorgesehen sein. Auch die Primärsteuerelektronik kann dabei mit wenigstens einem Gehäuse-Temperatursensor in Verbindung stehen. Dies ermöglicht dabei insbesondere die Erfassung der Gehäuse- und/oder Außentemperatur, sodass eine Energieübertragung gezielt an die tatsächlichen Bedürfnisse angepasst werden kann.

Der Heizung-Temperatursensor und/oder der Gehäuse-Temperatursensor werden vorzugsweise durch einen von der Temperatur abhängigen Widerstand, insbesondere einen PTC-Widerstand und/oder einen NTC-Widerstand und/oder einen Pt100-Widerstand und/oder einen Pt1000-Widerstand gebildet.

Gemäß einer weiteren Ausgestaltung ist vorgesehen, dass das Winderfassungselement aus Metall gefertigt ist, wodurch eine gute Wärmeleitung gewährleistet ist. Die Schalen des Schalensterns können beispielsweise zumindest annähernd halbkugelförmig ausgebildet sein.

Gemäß einer weiteren Ausgestaltung können die zwei Bereiche der Schalen durch zusätzliche quer zum Steg angeordnete Querelemente weiter unterteilt werden. Über die Stege und/oder Querelemente findet eine gute Verteilung der Wärme statt. Insbesondere bei einer Ausbildung aus Metall können die Schalen problemlos auf einer Temperatur gehalten werden, die eine Vereisung verhindert.

Um eine möglichst gute Wärmeübertragung zu ermöglichen wird das wenigstens eine Heizelement vorzugsweise flächig, insbesondere mäanderförmig, im Winderfassungselement angeordnet.

Weitere Vorteile und Ausgestaltungen der Erfindung werden im Folgenden anhand der nachfolgenden Beschreibung zweier Ausführungsbeispiele und der Zeichnung näher erläutert.

In der Zeichnung zeigen
- Fig. 1: eine Schnittdarstellung eines Windrads,
- Fig. 2: eine dreidimensionale Darstellung des Winderfassungselementes, der Fig. 1
- Fig. 3: eine Draufsicht des Heizelements der Fig. 1 und
- Fig. 4: ein elektrisches Blockschaltbild.

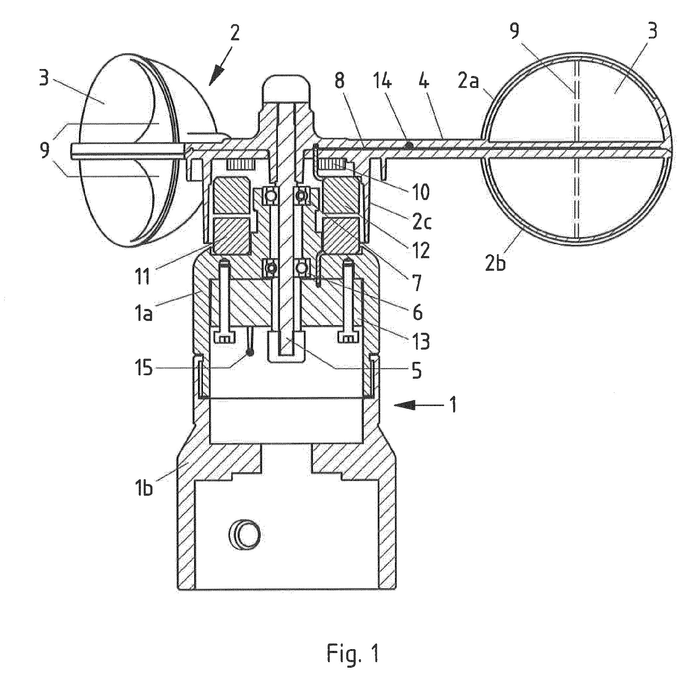

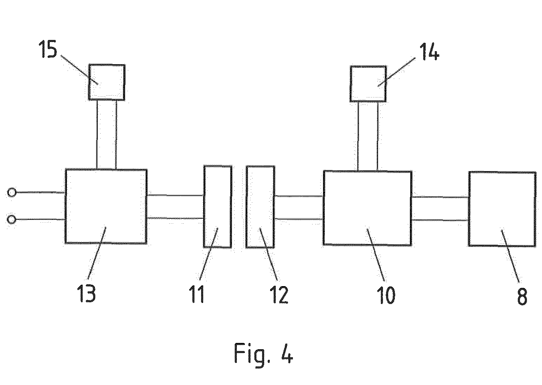

Der in den Fig. 1 bis 4 dargestellte Windsensor weist ein Gehäuse 1 auf, dass aus einem Gehäuseoberteil 1a und einem Gehäuseunterteil lb besteht und ein drehbar am Gehäuse gelagertes Winderfassungselement 2 aufweist. Bei dem Winderfassungselement 2 handelt es sich um ein Windrad, das durch einen Schalenstern mit mehreren Schalen 3 gebildet wird, die jeweils über flach ausgebildete Stege 4 gehaltert sind. Das Winderfassungselement 2 ist dabei mittels einer Welle 5 über Lager 6, 7 am Gehäuseoberteil 1a drehbar gelagert.

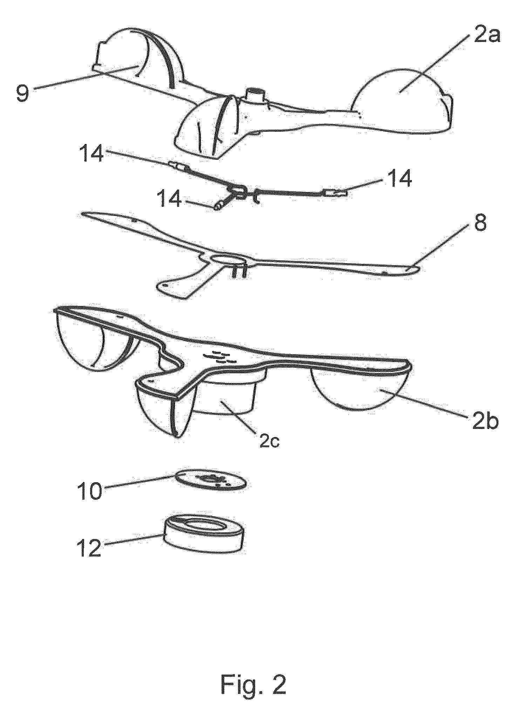

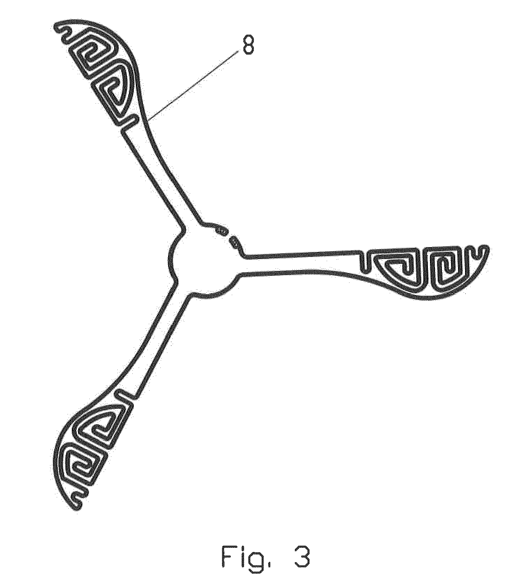

Wie insbesondere aus Fig. 2 ersichtlich wird, besteht das Winderfassungselement 2 aus zwei miteinander verbundenen Hälften 2a, 2b, wobei wenigstens ein Heizelement 8 zwischen die beiden Hälften eingebettet ist. Wie aus Fig. 3 ersichtlich wird, ist das Heizelement flächig, insbesondere mäanderförmig, ausgebildet und ist an die Form der Stege 4 angepasst. Die Stege 4 erstrecken sich bis in die Schalen 3 und unterteilen diese dort in zwei Bereiche, die hier etwa viertelkreisförmig ausgebildet sind. Da im Wesentlichen die Schalen den Wind erfassen, ist es besonders wichtig, dass es dort nicht zu Schnee- und Eisanhaftungen kommt. Daher erstreckt sich das Heizelement 8 in den Stegen bis in den Bereich der Schalen. Da das Winderfassungselement 2 vorzugsweise aus Metall gefertigt ist, kann sich die Wärme gut ausbreiten. Um die Wärmeverteilung gerade im Bereich der Schalen 3 noch weiter zu verbessern sind, dort weitere quer zum Steg 4 angeordnete Querelemente 9 vorgesehen, welche die annähernd viertelkugelförmig ausgebildeten Bereiche nochmals halbieren.

Bei dem Heizelement 8 handelt es sich um ein ohmsches Heizelement, insbesondere einen Widerstandsdraht, der über eine Sekundär-Steuerelektronik 10 mit Strom versorgt wird. Des Weiteren findet eine induktive Energieübertragung zwischen dem Gehäuse 1 und dem Winderfassungselement 2 statt, indem eine fest mit dem Gehäuse verbundene Primärspule 11 mit einer mit dem Winderfassungsrad 2 mitrotierenden Sekundärspule 12 zusammenwirkt. Die Ansteuerung der Primärspule 11 erfolgt über eine Primär-Steuerelektronik 13, die ans Versorgungsnetz angeschlossen ist. Eine weitere Besonderheit besteht darin, dass über wenigstens einen Heizungs-Temperatursensor 14 die Temperatur des Winderfassungselementes gemessen und in der Sekundär-Steuerelektronik 10 bei der Ansteuerung des Heizelementes 8 berücksichtigt wird. Durch diese geregelte Ansteuerung kann ein Überhitzen des Heizelementes 8 zuverlässig vermieden werden. Gemäß einer weiteren Ausgestaltung der Erfindung steht auch die Primär-Steuerelektronik 13 mit wenigstens einem Gehäuse-Temperatursensor 15 zur Erfassung der Temperatur des Gehäuses bzw. der Außentemperatur in Verbindung. Auf diese Weise kann eine Energieübertragung an den tatsächlichen Heizbedarf des Winderfassungselements 2 angepasst werden.

Die Primärspule 11 ist auf der Oberseite des Gehäuseoberteils 1 ortsfest angebracht, während die Sekundärspule 12 und die Sekundär-Steuerelektronik 10 mit dem Winderfassungselement 2 mitrotieren. Die beiden Spulen und die Sekundär-Steuerelektronik sind dabei in einem topfartig ausgebildeten Zentralteil 2c des Winderfassungselementes 2 untergebracht, der sich an das Gehäuseoberteil 1a anschließt und zum Gehäuseteil offen ausgebildet ist. Die Primär-Steuerelektronik 13 ist hingegen im Inneren des Gehäuseoberteils 1 angeordnet. Nachdem sich beim dargestellten Ausführungsbeispiel von dem topfartig ausgebildeten Zentralteil 2c drei Stege zu den drei Schalen 3 erstrecken, ist in jeden Steg jeweils ein Heizungs-Temperatursensor 14 vorgesehen, der insbesondere als Temperatur abhängiger Widerstand (PTC-Widerstand und/oder NTC-Widerstand, Pt100-Widerstand oder Pt1000-Widerstand) ausgebildet werden kann.

Das wenigstens eine Heizelement 8 ist mäanderförmig bzw. flächig ausgebildet, um dadurch die Heizenergie über eine möglichst große Fläche zu verteilen. Weiterhin wird durch den Heizungs-Temperatursensor und eine dadurch geregelte Energieübertragung auf das Heizelement eine übermäßige Aufheizung oder gar Überhitzung des Winderfassungselementes zuverlässig vermieden. Über die Primär-Steuerelektronik und dem mit dieser in Verbindung stehenden Gehäuse-Temperatursensor kann zudem die Energieübertragung und damit auch der Energieverbrauch an den tatsächlichen Bedarf angepasst werden.

## Patentansprüche

1. Windsensor mit einem Gehäuse (1) und einem drehbar am Gehäuse gelagerten Winderfassungselement (2), das durch ein Windrad gebildet wird, das einen Schalenstern mit mehreren Schalen (3) aufweist, wobei im Windrad wenigstens ein ohmsches Heizelement (8, 17a, 17b) eingebaut ist und Mittel zur Energieübertragung zwischen dem Gehäuse (1) und dem mit dem Windrad rotierenden ohmschen Heizelement vorhanden sind, die eine im Gehäuse (1) angeordnete Primärspule (11) und eine im Windrad angeordnete Sekundärspule umfassen, wobei die Sekundärspule mit dem ohmschen Heizelement (8) in Verbindung steht,
**dadurch gekennzeichnet, dass** das Winderfassungselement (2) aus zwei miteinander verbundenen Hälften (2a, 2b) besteht, wobei das wenigstens eine ohmsche Heizelement (8) zwischen den beiden Hälften eingebettet ist und die mehreren Schalen (3) des Windrads jeweils über flach ausgebildete Stege (4) gehaltert sind, wobei sich die Stege (4) bis in die Schalen erstrecken und die Schalen in zwei Bereiche unterteilen, und das wenigstens eine ohmsche Heizelement (8) in den Stegen (4) eingebettet ist und sich bis in den Bereich der Schalen erstreckt.

2. Windsensor nach Anspruch 1, **dadurch gekennzeichnet, dass** im Winderfassungselement (2) wenigstens ein Heizungs-Temperatursensor (14) zur Erfassung der Temperatur des Winderfassungselements (2) und eine Sekundär-Steuerelektronik (10) vorhanden ist, wobei der Heizungs-Temperatursensor (14) mit der Sekundär-Steuerelektronik (10) zur Ansteuerung des ohmschen Heizelements (8, 17a, 17b) in Abhängigkeit der Temperatur des Winderfassungselements (2) in Verbindung steht.

3. Windsensor nach Anspruch 1, **dadurch gekennzeichnet, dass** im Gehäuse (1) eine Primär-Steuerelektronik (13) zur Ansteuerung der Primärspule (11) vorgesehen ist.

4. Windsensor nach Anspruch 3, **dadurch gekennzeichnet, dass** die Primär-Steuerelektronik (13) mit wenigstens einem Gehäuse-Temperatursensor (15) in Verbindung steht.

5. Windsensor nach Anspruch 2 und/oder 4, **dadurch gekennzeichnet, dass** es sich bei dem Heizungs-Temperatursensor (14) und/oder bei dem Gehäuse-Temperatursensor (15) um einen von der Temperatur abhängigen Widerstand handelt.

6. Windsensor nach Anspruch 1, **dadurch gekennzeichnet, dass** das Winderfassungselement (2) aus Metall gefertigt ist.

7. Windsensor nach Anspruch 1, **dadurch gekennzeichnet, dass** die zwei Bereiche der Schalen durch weitere quer zum Steg (4) angeordnete Querelemente (9) weiter unterteilt sind.

8. Windsensor nach Anspruch 1, **dadurch gekennzeichnet, dass** das wenigstens ein Heizelement (8, 17a, 17b) mäanderförmig im Winderfassungselement (2) angeordnet ist.

## Claims

1. Wind sensor having a housing (1) and a wind detection element (2) which is rotatably supported on the housing and which is formed by a wind wheel, which has a star-like cup arrangement having a plurality of cups (3), wherein at least one ohmic heating element (8, 17a, 17b) is installed in the wind wheel and there are provided, for transmitting energy between the housing (1) and the ohmic heating element which rotates with the wind wheel, means which comprise a primary coil (11) which is arranged in the housing (1) and a secondary coil which is arranged in the wind wheel, wherein the secondary coil is connected to the ohmic heating element (8),
**characterised in that** the wind detection element (2) comprises two halves (2a, 2b) which are connected to each other, wherein the at least one ohmic heating element (8) is embedded between the two halves and the plurality of cups (3) of the wind wheel are each retained by means of planar webs (4), wherein the webs (4) extend as far as a location in the cups and divide the cups into two regions, and the at least one ohmic heating element (8) is embedded in the webs (4) and extends as far as a location in the region of the cups.

2. Wind sensor according to claim 1, **characterised in that** at least one heating temperature sensor (14) for detecting the temperature of the wind detection element (2) and a secondary electronic control system (10) are provided in the wind detection element (2), wherein the heating temperature sensor (14) is connected to the secondary electronic control system (10) in order to control the ohmic heating element (8, 17a, 17b) in accordance with the temperature of the wind detection element (2).

3. Wind sensor according to claim 1, **characterised in that** a primary electronic control system (13) for controlling the primary coil (11) is provided in the housing (1).

4. Wind sensor according to claim 3, **characterised in that** the primary electronic control system (13) is connected to at least one housing temperature sensor (15).

5. Wind sensor according to claim 2 and/or 4, **characterised in that** the heating temperature sensor (14) and/or the housing temperature sensor (15) is a resistor which is dependent on the temperature.

6. Wind sensor according to claim 1, **characterised in that** the wind detection element (2) is produced from metal.

7. Wind sensor according to claim 1, **characterised in that** the two regions of the cups are further divided by additional transverse elements (9) which are arranged transversely relative to the web (4).

8. Wind sensor according to claim 1, **characterised in that** the at least one heating element (8, 17a, 17b) is arranged in a meandering manner in the wind detection element (2).

## Revendications

1. Capteur de vent comprenant un boîtier (1) et un élément de détection de vent (2) monté en rotation sur le boîtier, élément de détection de vent qui est formé par une roue éolienne qui présente une étoile à coupelles comportant plusieurs coupelles (3), où au moins un élément chauffant ohmique (8, 17a, 17b) est intégré dans la roue éolienne, et des moyens sont présents qui servent à la transmission d'énergie entre le boîtier (1) et l'élément chauffant ohmique tournant avec la roue éolienne, moyens qui comprennent une bobine primaire (11) disposée dans le boîtier (1) et une bobine secondaire disposée dans la roue éolienne, où la bobine secondaire est en liaison de fonctionnement avec l'élément chauffant ohmique (8),
**caractérisé en ce que** l'élément de détection de vent (2) se compose de deux moitiés (2a, 2b) assemblées l'une à l'autre, où l'élément chauffant ohmique (8) au moins au nombre de un est intégré entre les deux moitiés, et les coupelles (3) de la roue éolienne, qui forment une pluralité de coupelles, sont fixées à chaque fois par des bras (4) configurés de façon plate, où les bras (4) s'étendent jusque dans les coupelles et subdivisent les coupelles en deux zones, et l'élément chauffant ohmique (8) au moins au nombre de un est intégré dans les bras (4) et s'étend jusque dans la zone des coupelles.

2. Capteur de vent selon la revendication 1, **caractérisé en ce qu'**il existe, dans l'élément de détection de vent (2), au moins un capteur de température et de chauffage (14) servant à la détection de la température de l'élément de détection de vent (2), et il existe une électronique de commande secondaire (10), où le capteur de température et de chauffage (14) est en liaison de fonctionnement avec l'électronique de commande secondaire (10) servant au pilotage de l'élément chauffant ohmique (8, 17a, 17b), en fonction de la température de l'élément de détection de vent (2).

3. Capteur de vent selon la revendication 1, **caractérisé en ce qu'**il est prévu, dans le boîtier (1), une électronique de commande primaire (13) servant au pilotage de la bobine primaire (11).

4. Capteur de vent selon la revendication 3, **caractérisé en ce que** l'électronique de commande primaire (13) est en liaison de fonctionnement avec au moins un capteur de température (15) du boîtier.

5. Capteur de vent selon 1a revendication 2 et/ou 4, **caractérisé en ce qu'**il s'agit, dans le cas du capteur de température et de chauffage (14) et/ou du capteur de température (15) du boîtier, d'une résistance qui dépend de la température.

6. Capteur de vent selon la revendication 1, **caractérisé en ce que** l'élément de détection de vent (2) est fabriqué en métal.

7. Capteur de vent selon la revendication 1, **caractérisé en ce que** les deux zones des coupelles sont encore subdivisées par d'autres éléments transversaux (9) disposés de façon transversale par rapport au bras (4).

8. Capteur de vent selon la revendication 1, **caractérisé en ce que** l'élément chauffant (8, 17a, 17b) au moins au nombre de un est disposé en forme de méandres, dans l'élément de détection de vent (2).
